# EUROPÄISCHE PATENTSCHRIFT

(11) **EP 0 550 073 B1**
(45) Veröffentlichungstag und Bekanntmachung des Hinweises auf die Patenterteilung: **21.08.1996**
(21) Anmeldenummer: 92122156.0
(22) Anmeldetag: 30.12.1992
(51) Int. Cl.: G01S 13/93, G01S 13/87

(54) **System zur Ortung einer Vielzahl von Objekten und Hindernissen sowie zur Erfassung und Bestimmung des Rollzustands von beweglichen Objekten, wie Flugzeugen, Bodenfahrzeugen u.ä.**
System for locating multiple objects and obstacles and for detecting and determining the rolling state of moving objects, such as aircraft, ground vehicles, etc.
Système de localisation d'objets et d'obstacles multiples et de détection et détermination de la condition de roulis d'objets en mouvement, comme avions, véhicules terrestres, etc.

(30) Priorität: 30.12.1991 DE 4143215
(43) Veröffentlichungstag der Anmeldung: 07.07.1993
(73) Patentinhaber: Deutsche Forschungsanstalt für Luft- und Raumfahrt e.V., D-51126 Köln (DE)
(72) Erfinder: Bethke,Karl-Heinz Dr., W-8031 Oberpfaffenhofen (DE); Röde,Bernd Dr., W.8000 München (DE); Schroth,Arno Dr., W.8039 Puchheim (DE)
(74) Vertreter: von Kirschbaum, Albrecht, Dipl.-Ing.

(56) Entgegenhaltungen:
- EP-A- 0 016 417
- GB-A- 2 165 414
- US-A- 4 499 468

## Beschreibung

Die Erfindung betrifft ein System zur Ortung einer Vielzahl von Objekten und Hindernissen sowie zur Erfassung und Bestimmung des Rollzustands von beweglichen Objekten, wie Flugzeugen, Bodenfahrzeugen u.ä. im Bereich eines Flughafens nach dem Oberbegriff des Anspruchs 1.

Anflüge und Landungen auf Flughäfen unter Schlechtwetter-Bedingungen stellen aufgrund von Verbesserungen an den eingeführten Instrumenten-Landesystemen (ILS) keine besonderen Probleme mehr dar. Die eigentliche Problematik liegt in der anschließenden Rollphase zwischen den Landebahnen und den "Gates". Bei einer hohen Verkehrsbelastung und/oder unter Schlechtwetter-Bedingungen sowie bei Dunkelheit haben weder die "Tower-Controller" eine genaue Kenntnis von der Position aller Flugzeuge oder Bodenfahrzeuge, beispielsweise von den sogenannten "Follow me"-Fahrzeugen auf dem Flugfeld, noch wissen die Piloten genau, wo sie sich gerade auf dem Flugfeld befinden. Hindernisse, wie abgefallene Triebwerksverkleidungen, verlorengegangene Gepäckanhänger sowie verirrte Versorgungsfahrzeugeund Flugzeuge stellen bei geringer Sicht ein großes Gefahrenmoment dar.

Bisher wird die Bodenverkehrskontrolle mittels Augenscheinnahme der Situation durch die Controller und die Piloten geregelt. Bei schlechter Sicht muß daher das Verkehrsaufkommen stark reduziert werden. Die Flugzeuge werden an kritischen Punkten durch optische Signale sowie durch den üblichen Sprechfunk geführt.

Auf einigen Großflughäfen steht zusätzlich ein sogenanntes Flughafen-Überwachungs-Primärradargerät zur Verfügung, das international als Airport Surface Detection Equipment (ASDE) bezeichnet wird. Selbst bei Aufstellen dieses Radars auf dem Tower treten in signifikanten Bereichen des Flughafengeländes Abschattungen der Fahrzeuge untereinander und insbesondere durch Gebäude auf. Infolge Mehrwegeausbreitungen der Radarsignale werden Falschziele detektiert. Obendrein ist eine direkte Bestimmung des Geschwindigkeitsvektors der einzelnen Objekte nicht möglich. Ebensowenig können die Richtung der Fahrzeug-Längsachse und die Identität ermittelt werden.

In DE 29 34 844 A1 ist ein kooperatives Verfahren in Form eines Flughafen-Überwachungssystems beschrieben. Zur Überwachung nur einer Rollbahn eines Flughafens mit einer Länge von beispielsweise 4 km werden eine große Anzahl von Bodeneinrichtungen benötigt. Eine Ortsbestimmung ist nur im Rahmen der Dichte eines sogenannten Sensornetzes möglich; der eigentliche Rollzustand, d.h. Position, Geschwindigkeitsvektor, Fahrzeugausrichtung und Identität können nur sehr eingeschränkt erfaßt werden. Eine Klassifizierung bzw. eine Bestimmung der Flugzeugausrichtung ist überhaupt nicht möglich.

Das in der Luftfahrt eingesetzte Secondary Surveillance Radar (SSR) dient derzeit ausschließlich zur Überwachung des fliegenden Verkehrs vom Boden aus. Hierbei werden Flugzeuge durch Messung der Schrägentfernung und des Azimutwinkels erfaßt. Im Mode A-Betrieb wird, ausgelöst durch ein Abfragesignal des SS-Radars, vom Flugzeug-Transponder ein von der Bodenzentrale zugewiesener Kennungscode zur Identifikation ausgesendet. Im Mode C wird zusätzlich die barometrische Höhe codiert übertragen. Um die Leistungsfähigkeit des Systems zu steigern, wurde der neue Mode S definiert und in weiten Bereichen standardisiert. Mit der Einführung wurde in den USA begonnen. Einige Eigenschaften des SSR-Mode-S machen ihn, im Gegensatz zum normalen SS-Radar auch für die Bodenverkehrskontrolle sehr geeignet.

Die Problematik bei den kooperativen Verfahren und damit auch bei einer kooperativen Rollzustandserfassung (RZE) besteht darin, daß in den nächsten Jahren nur wenige Flugzeuge und Bodenfahrzeuge mit Mode-S-Transpondern ausgerüstet sein werden. Auch in ferner Zukunft wird in der allgemeinen Luftfahrt ein großer Teil der Flugzeuge nicht über diesen Transponder-Typ verfügen.

Zur Erhöhung der Kapazität eines Flughafens sowie insbesondere zur Erhaltung der Sicherheit für den rollenden Verkehr unter Schlechtwetter-Bedingungen müssen dringend neue Methoden zur Bodenverkehrskontrolle entwickelt und eingeführt werden, durch welche die vorstehend aufgeführten Schwierigkeiten überwunden werden. Einen wesentlichen Bestandteil der künftigen Bodenverkehrs-Kontrollsysteme bilden Sensorsysteme zur Erfassung eventueller Hindernisse sowie des Rollzustands der Verkehrsteilnehmer auf dem Flughafen. Der Rollzustand setzt sich zusammen aus der Position, dem Geschwindigkeitsvektor, der Richtung der Fahrzeug-Längsachse, dem sogenannten Heading, und der Identität.

Zur Ortung von Hindernissen und zur Rollzustandserfassung von Objekten wie Flugzeugen, Bodenfahrzeugen, u.ä., welche nicht über einen Mode-S-Transponder verfügen, wird immer ein sogenanntes nichtkooperatives Verfahren bzw. eine nichtkooperative Rollzustandserfassung mittels Primärradartechnik notwendig sein, bei welchen die Streuung elektromagnetischer Wellen an den Objekten zu einer Ortung genutzt wird. Ein weiterer wichtiger Aspekt der Primärradartechnik besteht darin, daß sie unabhängig von internationalen Standardisierungsmaßnahmen realisierbar ist. Hierbei stehen die kooperative und die nicht-kooperative Rollzustandserfassung nicht in Konkurrenz zueinander, sondern ergänzen sich sinnvoll.

In DE 21 44 533 B2 ist ein Radar-Verkehrsüberwachungssystem insbesondere für Flugplätze, zur Überwachung des Landebereichs, der Rollbahnen und der Zubringer beschrieben. Bei diesem Überwachungssystem handelt es sich um ein nichtkooperatives Verfahren, mit welchem sich jedoch nur eine einzelne Rollbahn überwachen läßt. Eine Überwachung ausgedehnter Bereiche, beispielsweise eines ganzen Flughafens oder auch nur des sogenannten Flughafenfelds vor den Terminals, ist mit diesem Überwachungssystem nicht möglich. Auf den jeweiligen Bahnen darf sich nämlich immer nur ein Objekt bewegen; mehrere Objekte können daher gleichzeitig nicht erfaßt werden. Obendrein werden Festziele überhaupt nicht detektiert, und eine Bestimmung des Rollzustands ist nur sehr eingeschränkt möglich.

Ferner ist aus DE-AS 12 40 950 ein Luftverkehr-Überwachungssystem bekannt, welches ebenfalls ein nichtkooperatives Verfahren darstellt, und ebenso wie das vorstehend beschriebene Überwachungssystem nicht mehrzielfähig ist, so daß es für eine Bodenverkehrskontrolle nicht einsetzbar ist. Lediglich für den Spezialfall, daß sich Flugzeuge in räumlich stark voneinander getrennten Luftstraßen befinden, ist eine Trennung dieser Ziele in einem gewissen Umfang möglich.

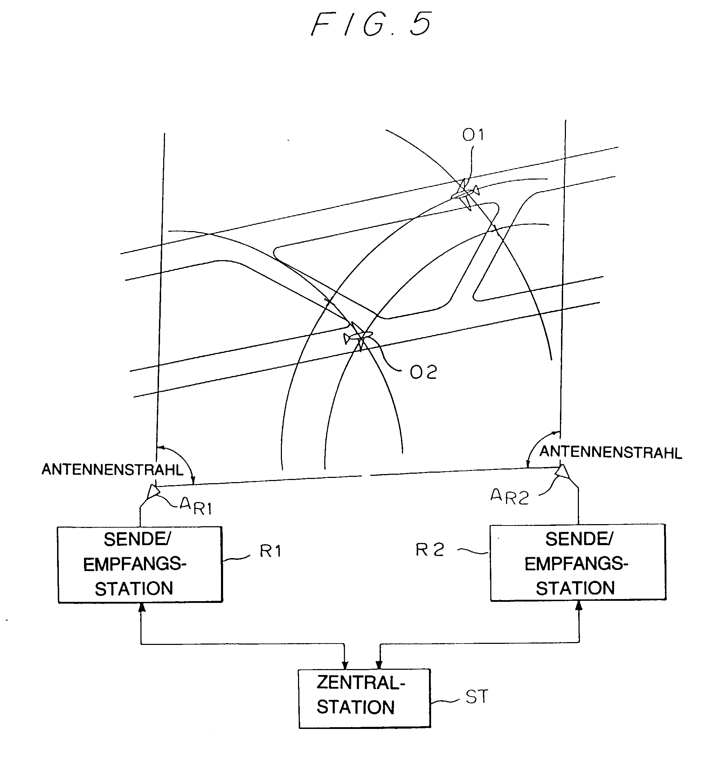

In Fig.5 ist ein einfaches Szenario im Bereich eines Flughafen-Rollfelds mit nur zwei Flugobjekten 01 und 02 in Form von Flugzeugen dargestellt. Mittels zwei Radarstationen R1 und R2 mit diesen zugeordneten Antennen A_{R1} und A_{R2} wird eine Ortung durchgeführt. Die Ortung der Objekte 01 und 02 durch monostatische Echolaufzeit-Messungen zweier Radarstationen R1 und R2, bei welchen sich Sende- und Empfangsantenne am selben Ort befinden, oder durch bistatische Echolaufzeit-Messungen zweier Radarstationen, bei welchen Sender und Empfänger räumlich getrennt sind, ist bekannt. Diese Anordnungen eignen sich jedoch nicht zur Ortung einer Vielzahl von Objekten, beispielsweise von einigen hundert Objekten, wie sie im Überwachungsabschnitt eines Großflughafens zu überwachen sind, da diese Anordnungen nicht mehrzielfähig sind.

Aufgrund der Tatsache, daß alle Ziele innerhalb einer Ausleuchtzone, die sich in demselben Entfernungsbereich befinden, was in Fig.5 durch konzentrische Kreisabschnitte dargestellt ist, zu einem Rückstreusignal dieses Entfernungsbereichs beitragen, kommt es bereits bei zwei Zielen beispielsweise in Form der beiden Objekte 01 und 02 zu Fehlortungen. In Fig.5 sind diese Falschziele durch "**X**" gekennzeichnet. Auf Flughafenvorfeldern, auf welchen sehr viele Objekte nahezu jede beliebige Position einnehmen können, ist das Ortungsergebnis mit zwei Radarstationen daher als "chaotisch" zu bezeichnen.

Aufgabe der Erfindung ist es, ein System zur Ortung einer Vielzahl von Objekten und Hindernissen sowie zur Erfassung und Bestimmung des Rollzustands von beweglichen Objekten, wie Flugzeugen, Bodenfahrzeugen, u.ä. auf einem Flughafen zu schaffen, mit welchem in allen befahrbaren Bereichen des Flughafens, insbesondere bei schlechter Sicht, sich bewegende Objekte, wie Flugzeuge und Bodenfahrzeuge, festgestellt und eine Klassifikation dieser Objekte durchgeführt werden kann.

Bei dem erfindungsgemäßen System zur Ortung einer Vielzahl von Objekten und Hindernissen sowie zur Erfassung und Bestimmung des Rollzustands von beweglichen Objekten, wie Flugzeugen, Bodenfahrzeugen u.ä. im Bereich eines Flughafens ist ein Nahbereichs-Radarnetz mit mindestens drei Radarstationen vorgesehen, von welchen aus über einfache, feststehende Sendeantennen mit kohärenten, zeitlich gepulsten Mikrowellen ein großer Sektor im Azimut von in der Regel jeweils mehr als 90° ausgeleuchtet wird. Neben den zeitlich gepulsten Mikrowellen können zur Erzielung der gewünschten Entfernungsauflösung auch andere Mikrowellen-Signalformen Verwendung finden. Den Radarstationen sind ferner feststehende Empfangsantennen mit einer starren unterteilten Sektorcharakteristik mit jeweils einem Empfangskanal je Teilsektor zugeordnet, wobei für bistatische Messungen auch Signale von anderen Stationen empfangen werden. Die Trennung der Signale von einzelnen Stationen kann durch Wahl unterschiedlicher Frequenzen bzw. eine zeitliche Triggerung von Sendesignalen und Empfänger-Aufschaltungen oder auch durch stationsspezifische Modulationscodes erfolgen. Hierbei können die Ausleuchtzonen so gewählt werden, daß keine Schattenzonen, beispielsweise durch Gebäude auftreten.

Da die Mehrzielfähigkeit ein wesentliches Merkmal des erfindungsgemäßen Systems ist, können gleichzeitig hunderte von auf einem modernen Großflughafen vorhandenen Fest- und Bewegtzielen gleichzeitig erfaßt werden. Ferner ist bei dem erfindungsgemäßen System ein minimaler, technischer Aufwand bei einer gleichzeitig großen Zuverlässigkeit sowie einer großen Wartungsfreundlichkeit gewährleistet.

Bei dem erfindungsgemäßen System ist somit ein Nahbereichs-Radarnetz mit mindestens drei an unterschiedlichen Standorten positionierten, unbewegten Sende-/Empfangsantennen mit breiter azimutaler Sektor-Charakteristik vorgesehen. Zur Ausleuchtung von definierten Flughafenbereichen müssen die Strahlungsdiagramme der Antennen der Radarstationen in der Horizontalebene, d.h. im Azimut eine nahezu sektorförmige Charakteristik aufweisen, während die Diagramme in der Elevationsebene die übliche Keulenform mit einer 3dB-Breite von etwa 4° haben.

Durch die Azimut-Sektorcharakteristik werden Falschechos aufgrund von Mehrwegeausbreitung, beispielsweise aufgrund von Reflexionen an den Flughafengebäuden, reduziert. Hierzu ist die Antennencharakteristik in wenigstens zwei Teilsektoren unterteilt; durch einen Vergleich der Laufzeiten mit den Ortungsergebnissen von den mindestens drei Einzelstationen des Nahbereichs-Radar-Netzes (NRN) lassen sich dann die Falschechos leicht erkennen. Wenn die Sende- und die Empfangsantenne räumlich getrennt sind, können mittels bistatischer Messungen zwischen den Einzelstationen die Fehlerortungswahrscheinlichkeiten weiter erheblich reduziert werden. Hierbei können Summenlaufzeit-Messungen mit Hilfe einer Ellipsenortung und Differenzlaufzeit-Messungen mit Hilfe einer Hyperbelortung durchgeführt werden. Ferner weisen beim Nahbereichs-Radarnetz (NRN) die Antennen benachbarter Stationen, aus denen die Stationspaare zur monostatischen Laufzeitmessung gebildet werden, eine gemeinsame Antennenstrahl-Begrenzung auf. Hierdurch sind mehrdeutige Doppelschnitte zweier sich schneidender Kreisbögen vermieden. Aufgrund der flexiblen Wahl der Sektorgrenzen in den NRN-Modulen können Schattenzonen und unerwünschte Reflexionen an Gebäuden, usw. vermieden werden.

Bei dem erfindungsgemäßen System sind Messungen sowohl bei Dunkelheit als insbesondere auch unter Schlechtwetter-Bedingungen, wie beispielsweise bei Nebel durchführbar. Durch eine Auswertung von Laufzeitmessungen der einzelnen Stationen können Objekte bzw. Ziele innerhalb eines gemeinsam ausgeleuchteten Areals geortet und verfolgt werden; aus den Ergebnissen ist dann eine Bestimmung des Geschwindigkeitsvektors sowie der Aufbau einer Spur möglich. Hierbei ist jede Station für sich grundsätzlich in der Lage, von Fahrzeugen die sich innerhalb des ausgeleuchteten Areals bewegen, unabhängig von der Entfernung zur jeweiligen Station, zwei-dimensionale hochaufgelöste Mikrowellenbilder zu erzeugen. Durch Auswertung der zweidimensionalen Mikrowellenbilder von bewegten Objekten bzw. Zielen ist dann auch eine Objektklassifizierung sowie eine Bestimmung der Richtung der Fahrzeug-Längsachse, beispielsweise eines Flugzeugs, möglich.

Im Unterschied zu einem herkömmlichen, zentralen Flughafen-Überwachungsradar weist das erfindungsgemäße Nahbereichs-Radarnetz (NRN) einen flächendeckenden modularen Aufbau auf. Die einzelnen Radarstationen sind hierbei so zu positionieren, daß Abschattungen durch Gebäudeteile weitestgehend vermieden sind. Wegen der geringen, zu überwachenden Entfernungen innerhalb eines NRN-Moduls des Nahbereichs-Radarnetzes sind erheblich geringere Leistungsdichten erforderlich als bei dem üblichen, zentralen Überwachungsradar.

Weiterhin ist bei dem erfindungsgemäßen Nahbereichs-Radarnetz vorteilhaft, daß alle Einzelstationen die von ihnen selbst oder von anderen Stationen ausgelösten Echosignale empfangen können. Hierdurch können dann sogenannte bistatische Meßgeometrien gebildet werden, bei welchen die Sende- und die Empfangsantenne räumlich getrennt sind. Da die Streuung der Radarsignale, welche zeitlich gepulste elektromagnetische Wellen darstellen, im allgemeinen nicht isotrop ist, können durch solche bistatischen Messungen im Vergleich zu einer monostatischen Messung, bei welcher die Sende- und Empfangsantenne dieselbe ist, wichtige zusätzliche Informationen hinsichtlich der Ortsbestimmung, der Objekt-Längsrichtung und der Klassifikation der Objekte gewonnen werden.

Durch Aufstellen von mindestens drei Radarstationen mit räumlich feststehender, breiter Antennen-Richtcharakteristik, welche im Azimut je nach Anforderung einen Bereich von mehr als 90° und in der Elevation nur etwa 4° überstreichen, werden sämtliche Objekte innerhalb eines zu kontrollierenden Teilbereichs eines Flugplatzes beleuchtet. Nachfolgend wird die Erfindung anhand von bevorzugten Ausführungsformen unter Bezugnahme auf die anliegenden Zeichnungen im einzelnen erläutert. Es zeigen:
- Fig.1: einen Grundriß eines Teilbereichs des Flughafens München sowie Ausleuchtbereiche von vier Radarstationen zur Rollzustandserfassung auf dem Flughafen;
- Fig.2: wiederum den Grundriß eines Teilbereichs des Flughafens München sowie der Ausleuchtbereich von vier Radarstationen mit einer Vielzahl georteter Flugzeuge und Hindernisse;
- Fig.3: eine schematische Darstellung des Prinzips einer Mikrowellen-Abbildung mittels einer synthetischen Apertur;
- Fig.4a und 4b: zwei typische Mikrowellenbilder eines skalierten Flugzeugs (im Maßstab 1:20) eines Airbus A310 für horizontale Polarisation, und
- Fig.5: einen schematischen Aufbau eines Nahbereichs-Radarnetzes mit nur zwei Radarstationen mit unbewegten Sende- und Empfangsantennen zur Veranschaulichung der Fehlortung von Objekten.

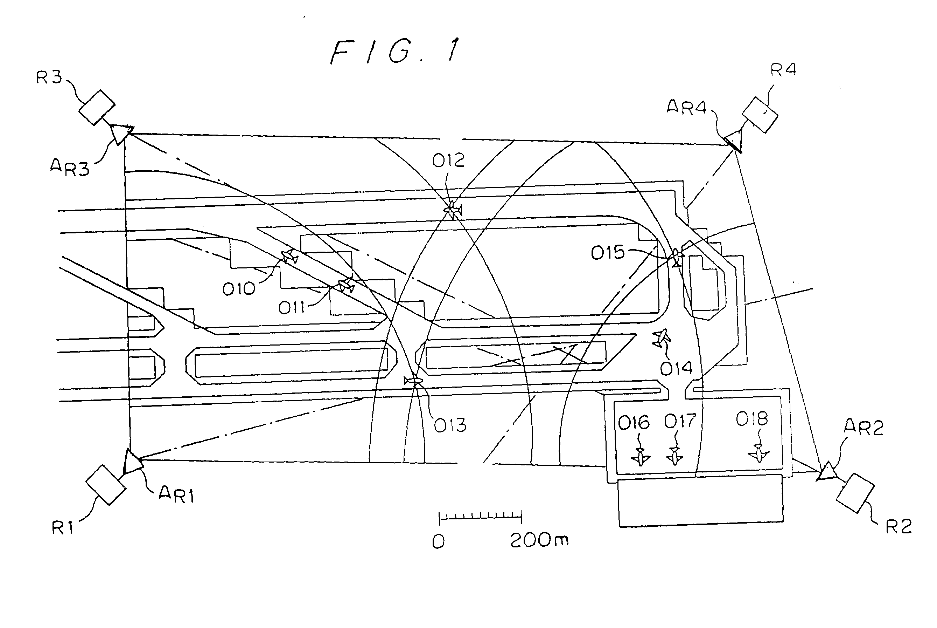

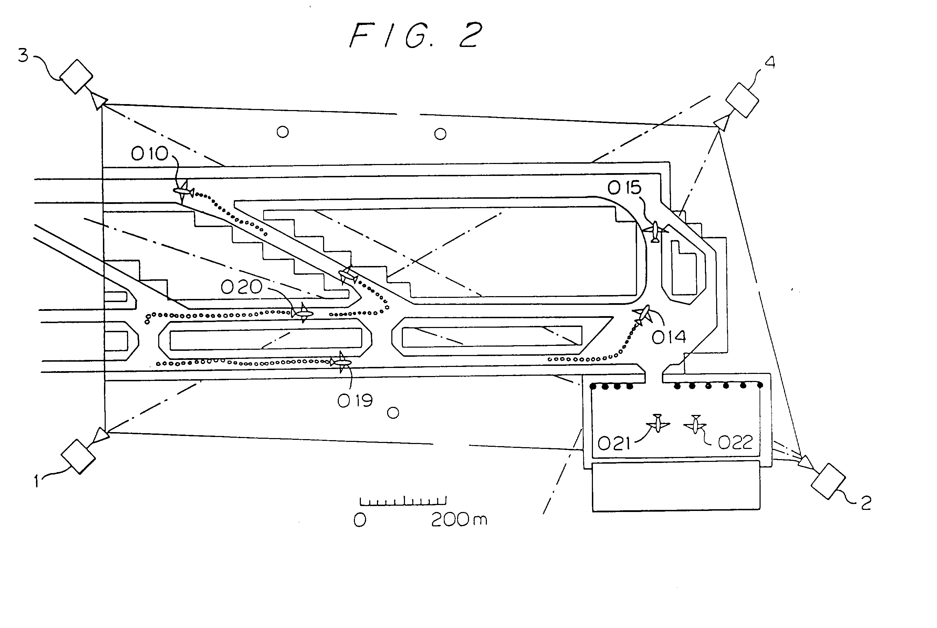

In Fig.1 ist im Grundriß ein Szenario des Flughafens München wiedergegeben. Ferner sind durch Rechtecke angezeigte Standorte von vier Radarstationen R1 bis R4 sowie die Ausleuchtbereiche der vier Radarstationen eines Nahbereichs-Radarnetzes wiedergegeben. In Fig.1 sind einige bezüglich der Radarstationen R1 und R2 konzentrische, ausgezogen wiedergegebene Kreisabschnitte eingezeichnet. Diese symbolisieren Entfernungszonen der beiden Radarstationen R1 und R2. Strichpunktierte Linien deuten eine mögliche Ausführung individuell unterschiedlicher Diagrammaufteilungen von Empfangsantennen an. Durch Unterteilen eines Sektordiagramms der Antennen A_{R1} bis A_{R4} im Empfangsteil in zwei Teilsektoren treten dann praktisch keine Fehlortungen mehr auf. Durch eine entsprechende Aufstellung der den Radarstationen R1 bis R4 zugeordneten Antennen A_{R1} bis A_{R2} werden Schattenzonen vermieden. In einem dynamischen Bild, d.h. bei einer Darstellung von Ortungsergebnissen für mehrere Zeitpunkte, wenn eine Vielzahl bewegter Objekte vorhanden ist, treten, wie aus Fig.2 zu ersehen ist, nur noch kurzzeitige Ortungsungenauigkeiten auf, welche durch ein Filter (in Software) unterdrückt werden können. In Fig.2 sind 21 Objekte vorgegeben, und zwar 13 Hindernisse in Form von Festzielen, welche durch "O" gekennzeichnet sind, und 8 detektierte Objekte, nämlich die Flugzeuge 0₁₀, 0₁₁, 0₁₄, 0₁₅ und 0₁₉ bis 0₂₂, deren wiedergegebene Spuren einer Meßzeit von 32s entsprechen.

Eine Kombination der Radarstationen R₁und R₂, R₁ und R₃ sowie R₂ und R₄ stellt hierbei ein wirtschaftliches Optimum dar. Durch die zusätzliche Verwendung des Radarstationpaares R₃ und R₄ kann eine kurzzeitige Ortungsungenauigkeit weiter reduziert werden. Die bekannten durch " O " gekennzeichneten 13 Festziele können durch rechnergesteuertes, zeitliches Austasten der Empfänger oder durch eine Kompensation der komplexwertigen Echosignale mit den gespeicherten Meßwerten für die Ausgangssituation (keine beweglichen Objekte) unterdrückt werden.

Im Rahmen der vorhandenen redundanten Informationen wird eine Auswahl von Echos bezüglich einer geringstmöglichen Störung aufgrund von Mehrwege-Ausbreitungen getroffen. Obwohl hinsichtlich der Anzahl der benötigten Radarstationen aufgrund der Überdeckung ihrer Ausleuchtbereiche im Azimut eine breitere Richtcharakteristik der einzelnen Antennen wünschenswert wäre, würde dies einen Einsatz größerer Sende; leistungen bei einer vorgegebenen Empfängerempfindlichkeit bedingen; außerdem würden sich die Ausbreitungsbedingungen der Signale erheblich verschlechtern.

Ein System zur Ortung einer Vielzahl von Objekten und Hindernissen sowie zur Erfassung und Bestimmung des Rollzustands von bewegten Objekten weist mindestens drei, vorzugsweise vier oder mehr kohärente, üblicherweise gepulste Radarstationen am Flugfeldrand sowie auf entsprechenden Gebäuden, eine zentrale Signalverarbeitung und Steuerung sowie ein Datennetz zur Verbindung der einzelnen Radarstationen mit der Zentrale auf.

Eine Ortsbestimmung der einzelnen Objekte mittels Laufzeitmessungen erfolgt durch Erfassung der Echosignale sämtlicher beleuchteter Streuer in allen Stationen in radial äquidistanten Entfernungsschritten entweder durch tomographische Projektionen der Echosignale, worunter eine gleichmäßige Verteilung des Rückstreuechos eines Entfernungsbereichs (einer Tiefenzone) über den gesamten, entsprechenden Kreisabschnitt verstanden wird, oder vorzugsweise durch Berechnung der Schnittpunktskoordinaten sich schneidender Kreisbögen, welche die Orte gleicher Echolaufzeiten definieren. Gegebenenfalls wird zusätzlich mittels einer Differenz-Multilateration, was einer Hyperbelortung entspricht, bzw. mittels einer Summen-Multilateration, was einer Ellipsenortung entspricht, geortet.

Im Gegensatz zum herkömmlichen Radar, bei welchem die winkelmäßige Auflösung durch die Strahlungscharakteristik (einer schmalen Hauptkeule) der rotierenden Antenne festgelegt ist, erfolgt beim Nahbereichs-Radarnetz eine möglichst gleichmäßige Ausleuchtung über einen großen azimutalen Winkelbereich, wobei an den Rändern die Strahlungsintensität schnell auf sehr niedrige Werte abfällt. Dadurch überlagern sich die Echosignale sämtlicher Streuer, welche sich innerhalb derselben Entfernungszone befinden, zu einem resultierenden Gesamtsignal. Jede Entfernungszone definiert daher den Radius eines Kreisringsektors, dessen Krümmungs-Mittelpunkt mit dem Phasenzentrum der jeweiligen Antenne zusammenfällt. Entsprechend der Pulsform des Sendesignals und der zeitlichen Aufschaltung des Empfängers sowie dessen Filtereigenschaften erfolgt eine entfernungsmäßige Gewichtung der Echos. Die Berechnung der Koordinaten der Schnitte von Kreisabschnitten mehrerer meist benachbarter Stationen definiert die Orte der Streuer. Die Antennen A_{R1} bis A_{R4} der einzelnen Radarstationen R1 bis R4 sind so angeordnet, daß stets die Antennen von benachbarten Stationen eine gemeinsame Antennenstrahlbegrenzung aufweisen, wie in Fig.1 angedeutet ist. Dadurch werden mehrdeutige Doppelschnitte zweier sich schneidender Kreisbögen, welche einander benachbarten Radarstationen zugeordnet sind, vermieden.

Die Zahl von mehrdeutigen Schnitten wird durch eine Aufteilung des Antennendiagramms der Empfangsantenne in wenigstens zwei Sektoren weiter reduziert, welchen jeweils ein separater Empfangskanal zugeordnet wird.

Bei komplexen Zielen, wie sie Bodenfahrzeuge und Flugzeuge darstellen, empfängt jede der Einzelstationen R1 bis R4 ein ausreichend starkes Echo. Die Auflösung der Streuzentren der Objekte in der Meßebene ist beim Nahbereichs-Radarnetz durch die radiale Ausdehnung der Tiefenzonen festgelegt und somit entfernungsunabhängig. Dagegen wird beim herkömmlichen Radar die azimutale Auflösung mit zunehmender Entfernung vom Radar immer schlechter.

Durch die Wahl schmaler Entfernungszonen, wobei Werte um einen Meter durchaus realistisch sind, da sie Impulsbreiten in der Größenordnung von 6ns entsprechen, im Vergleich zu den charakteristischen Objektdimensionen lassen sich bereits mittels der tomographischen Projektionen Mikrowellenbilder von Objekten erzeugen, welche zu deren Klassifikation und zur Bestimmung der Fahrzeuglängsrichtungen herangezogen werden können.

Mehrwegeausbreitungen der Signale, beispielsweise durch Reflexionen an Gebäuden, können, wie vorstehend bereits ausgeführt, zu Fehlinterpretationen führen. Mit Hilfe des Nahbereichs-Radarnetzes sind jedoch mehrere Möglichkeiten gegeben, diese Störsignale zu erkennen und bei einer anschließenden Prozessierung zu unterdrücken. Zusätzlich kann gegebenenfalls eine Ortsbestimmung mit Hilfe von Standlinien konstanter Differenz- bzw. Summenlaufzeit zwischen den jeweils beteiligten Stationen erfolgen. Hierbei müssen immer zwei Standlinien zu einem nichtschleifenden Schnitt gebracht werden. Mehrdeutigkeiten durch Mehrfachschnitte einzelner Standlinien sind nicht relevant und können durch die Hinzunahme weiterer Standlinien aufgelöst werden.

Bezüglich der Störung der Wellenausbreitung auf Flughäfen gelten die gleichen Gesichtspunkte wie bei der kooperativen Rollzustandserfassung mittels SSR-Mode-S. Dies bedeutet, die Antennenstandorte für beide Verfahren, nämlich das Nahbereichs-Radarnetz und SSR-Mode-S, können identisch sein. Somit kann die vorhandene, kostspielige Infrastruktur, wie Antennenträger, Kabelschächte, Stromversorgung usw. mitverwendet werden.

Mit den vorstehend beschriebenen Verfahren der tomographischen Projektionen, welches ein in der Praxis nur selten gegebenes, gleichmäßiges Streuverhalten der Streuzentren über größere Winkelbereiche voraussetzt, ist eine Objekt-Erkennung bzw. -Klassifikation sowie die Bestimmung der Richtung der Fahrzeug-Längsachse nur bedingt erreichbar. Wesentlich bessere Mikrowellenbilder werden durch Aufspannen einer "synthetischen Apertur" für jede einzelne Station erzeugt.

Hierbei ist der Aufbau einer eindeutigen Spur für jedes der bewegten Objekte, beispielsweise der Flugzeuge 0₁₀, 0₁₁, 0₁₄, 0₁₅, 0₁₉, und 0₂₀, wesentliche Voraussetzung für die Erzeugung von Mikrowellenbildern für Klassifikationszwecke. Hierbei sind zur Klassifikation von Objekten verschiedene Algorithmen bekannt. Diese benötigen als Eingabe Meßdaten-Felder, z.B. in Form der Mikrowellenbilder, welche charakteristisch für das Objekt sind. Durch geeignete "Kombinationen" der Mikrowellenbilder, beispielsweise über eine "Wissensbasis", kann dann eine Objektklassifikation erfolgen. In jüngster Zeit wird die Objektklassifikation häufig mittels sogenannter "neuronaler Netze" durchgeführt, welche über einen Lernprozeß optimiert werden.

Durch die Relativbewegung zwischen Objekt und Radarstation wird eine sogenannte "Synthetische Apertur", d.h. eine "Synthetische Strahlerfläche" (Synthetic Aperture Radar (SAR)) aufgespannt. Im vorliegenden Fall bewegt sich im Gegensatz zum SAR das Objekt und nicht das Radar, weshalb von einem Invers Synthetic Apertur Radar (ISAR) gesprochen wird. Zur Reduktion des Rechenaufwands wird die Spur der Objekte durch Kreisbögen angenähert. Im objektfesten Koordinatensystem bewegt sich die Radarstation auf einem Kreisabschnitt, dessen Geometrie durch den Abstand zwischen Radar und Objekt sowie die Aspektwinkel-Variation Δθ bestimmt ist.

Im vorliegenden ebenen Fall reduziert sich damit die "Synthetische Apertur" auf eine Antennengruppe deren Strahler auf dem Kreisbogen liegen und deren virtueller Elementabstand δθ durch den zeitlichen Abstand der Messungen und die Objektgeschwindigkeit festgelegt ist. Die nacheinander gemessenen Echosignale werden hinsichtlich der unterschiedlichen Laufzeiten korrigiert. Dadurch entsteht auf "synthetischem Weg" die vorstehend angeführte Antennengruppe, deren Ausdehnung für die Auflösung des Mikrowellenbildes und deren Elementabstand für die maximale Größe der zu vermessenden Objekte maßgeblich ist.

Mittels einer Signalverarbeitung wird das synthetische Array auf jedes Ziel separat fokussiert; d.h. die anderen im Ausleuchtbereich befindlichen Ziele verschwinden durch eine Mittelung im Signalraüschen. Bei dem ausgewählten Ziel, bei welchem Position und Spur aus dem Ortungs-Mode bekannt sind, erfolgt über die Signalverarbeitung eine Fokussierung für jede Auflösungszelle (Pixel).

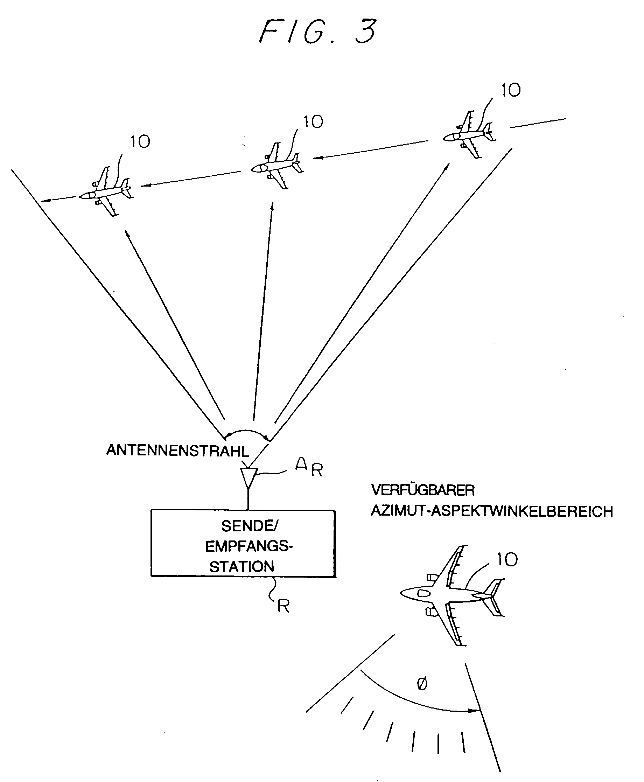

In Fig.3 ist das Prinzip einer Mikrowellen-Abbildung mittels der synthetischen Apertur wiedergegeben, wodurch eine monostatische Geometrie erhalten wird. Zur Vereinfachung der Darstellung ist in Fig.3 lediglich eine Sende-/Empfangs-Station R mit einer zugeordneten Antenne A_{R} dargestellt und der Ausleuchtbereich im Azimut eingetragen. Bei einer bistatischen Messung gehören im Unterschied zu der Darstellung in Fig.3 Sende- und Empfangsantenne zu verschiedenen Stationen. Mit Hilfe der variierenden Azimutaspekte ist die translatorische Bewegung eines Fahrzeugs, beispielsweise des Flugzeugs 10, durch den Antennenstrahl auf eine relative Drehbewegung reduzierbar. Die für die Querauflösung erforderliche Größe der hieraus resultierenden, synthetischen Apertur beschränkt sich nur auf einen kleinen Teil, beispielsweise ein Grad, des insgesamt für die Abbildung verwendbaren Azimut-Aspektwinkelbereichs. Es wird also die Bewegung der zu erfassenden Objekte genutzt, welche sich innerhalb des Ausleuchtbereichs der jeweiligen Antenne befinden. Stehende Objekte lassen sich hiermit nicht abbilden.

Zur Vereinfachung der Algorithmen wird der jeweilige Fahrweg durch gerade oder kreisförmige Abschnitte angenähert, da zur Erzielung einer Querauflösung (Azimut) von einem Meter bei einer angestrebten Signalfrequenz im cm-Wellenbereich lediglich die Rückstreudaten für ein Aspekt-Winkelintervall von ca. einem Grad zu prozessieren sind. Nur über diesem geringen Winkelbereich werden gleichmäßige Streueigenschaften und Bewegungen der Objekte vorausgesetzt. Durch die maximale Größe der zu identifizierenden Objekte ist das Winkelinkrement zwischen den einzelnen Messungen festgelegt. Die synthetische Apertur wird durch Korrektur der komplexwertigen Echosignale, wobei meistens nur die Phase korrigiert werden muß, entsprechend der durch die relative Drehbewegung der Objekte hervorgerufenen Werte erzeugt. Durch die Relativbewegung entsteht eine kreisförmige Antennengruppe, deren Elementabstand durch die Winkelinkremente bestimmt ist. Die Relativbewegung ist aus der Anwendung der vorstehend bereits beschriebenen Ortungsverfahrens bekannt.

Ein wesentliches Merkmal der synthetischen Apertur ist die entfernungsunabhängige Auflösung im Azimut, da die Größe der Apertur der Wegstrecke des betrachteten Objekts innerhalb des Prozeßwinkels entspricht; d.h. es besteht ein linearer Zusammenhang zwischen der Zielentfernung und der Aperturgröße.

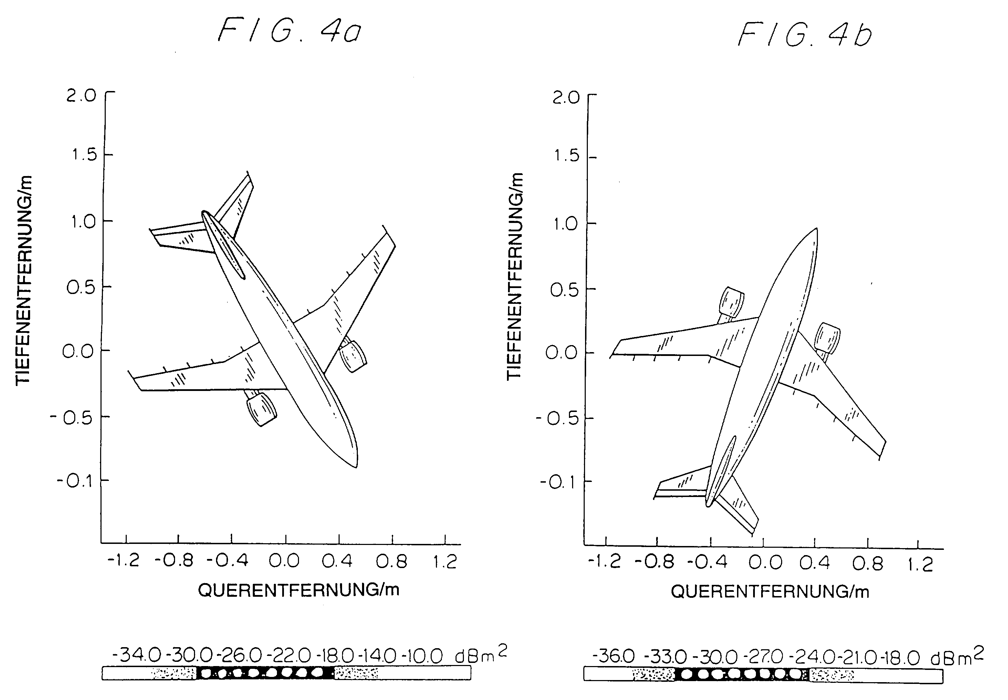

In Fig.4a und 4b sind Mikrowellenbilder eines Flugzeugmodells (Maßstab 1: 20), beispielsweise eines Airbus A310 für zwei verschiedene Aspektwinkel dargestellt, wobei für Senden und Empfang die horizontale Polarisation verwendet wurde. In Fig.4a und 4b ist auf der Abszisse jeweils die Querentfernung in Metern (m) und auf der Ordinate die Tiefenentfernung ebenfalls in Metern (m) eingetragen. Bei der wiedergegebenen Aufnahme betrug die Frequenz 12,5GHz und die Rückstreu-Querschnitte sind in dBm² gemessen.

Durch Vermessen und Auswerten komplexwertiger Echos bewegter Ziele mit Hilfe unbewegter Antennen von mehreren Stationen aus werden somit Mikrowellenbilder aus unterschiedlichen Aspekten zur Klassifikation dieser Ziele und zur Bestimmung ihrer Längsausrichtung erzeugt.

Durch eine entsprechende Auswertung solcher Bilder für zwei oder mehrere Aspektwinkel sowie durch die Ausnutzung der polarisationsabhängigen Eigenschaften des Streufelds ist eine gute Zielklassifikation mittels Wissensbasis (in Form einer Datenbank) möglich.

Da sich Mikrowellenbilder von optischen Bildern dadurch unterscheiden, daß die Objekte nicht diffus, sondern mit einer monochromatischen Welle aus einer bestimmten Richtung beleuchtet werden, tragen nur wenige Streuzentren zum Streufeld bei. In Abhängigkeit von der Objektgeometrie kann daher der Fall eintreten, daß bei einfachen Körpern für bestimmte Beleuchtungsrichtungen praktisch kein auswertbares Signal zurückgestreut wird; aufgrund der relativen Bewegung der Objekte werden diese Lücken jedoch automatisch überbrückt.

Bei unbewegten Zielen ist daher zur sicheren Detektion und Ortung eine Systemredundanz erforderlich, welche entweder durch die Aufstellung zusätzlicher Radarstationen oder durch bistatische Messungen erzielt werden kann. Ferner können durch Ausnutzen bistatischer Geometrien weitere Mikrowellenbilder erzeugt werden, welche die Lücken der aus monostatischen Messungen gewonnen Bilder auffüllen.

Mit Hilfe von Mikrowellenbildern sind ferner durch Mehrwege-Ausbreitung hervorgerufene Falschechos erkennbar, da Mehrwegesignale eine größere Wegstrecke als das direkte Signal zwischen der jeweiligen Radarstation und dem Ziel auf dem Hin- und Rückweg zurücklegen. Der Abbildungsalgorithmus setzt jedoch für alle Signale die direkte Signalausbreitung voraus. Dadurch erscheinen im Mikrowellenbild in Abhängigkeit von den gegebenen Ausbreitungsbedingungen Falschziele oder Clutterstrukturen. Diese Clutterstrukturen treten in den Mikrowellenbildern für die einzelnen Radarstationen, bedingt durch die wechselnden, geometrischen Verhältnisse, an unterschiedlichen Stellen auf und können somit leicht erkannt werden.

Translatorische Geschwindigkeitsvektoren von Objekten oder Zielen ergeben sich unmittelbar aus Dopplersignalen von mindestens zwei der einzelnen Radarstationen. Durch Korrelation der zeitlich aufeinanderfolgenden Echoprofile der Einzelstationen lassen sich die entsprechenden Radialgeschwindigkeiten der Ziele in Quasiechtzeit mit einem geringeren Datenbedarf im Vergleich zur Dopplertechnik bestimmen. Das beschriebene Nahbereichs-Radarnetz ist auch zur Überwachung und Regelung des Straßenverkehrs, insbesondere bei starkem Nebel und Dunkelheit, an kritischen Kreuzungen oder wichtigen Plätzen, einsetzbar.

## Patentansprüche

1. System zur Ortung einer Vielzahl von Objekten und Hindernissen sowie zur Erfassung und Bestimmung des Rollzustands von beweglichen Objekten, wie Flugzeugen, Bodenfahrzeugen u.ä. im Bereich eines Flughafens, mit einer Anzahl Radarstationen zum Senden und Empfangen und einer Zentralstation, **gekennzeichnet** durch ein Nahbereichs-Radarnetz mit mindestens drei Radarstationen (R), von welchen aus über feststehende Sendeantennen (A_{R}) mit kohärenten, zeitlich gepulsten Mikrowellen oder auch anderen Mikrowellen-Signalformen ein großer Sektor im Azimut von in der Regel jeweils mehr als 90° ausgeleuchtet wird, und welchen feststehende Empfangsantennen (A_{R}) mit starrer, unterteilter Sektorcharakteristik mit jeweils einem Empfangskanal je Teilsektor zugeordnet sind, welche für bistatische Messungen auch Signale von den anderen Stationen empfangen, wobei die Trennung der Signale von einzelnen Stationen durch Wahl unterschiedlicher Frequenzen oder eine zeitliche Triggerung von Sendesignalen und Empfänger-Aufschaltungen oder durch stationsspezifische Modulationscodes erfolgt, und Ausleuchtzonen so gewählt sind, daß keine Schattenzonen auftreten.

2. System nach Anspruch 1, dadurch **gekennzeichnet,** daß eine genaue Positionsbestimmung und eine genaue Spurbildung mit einer Ortungsgenauigkeit von wenigen Metern von zu erfassenden Objekten mittels Berechnung der Schnittstellen von Kreisbögen, welche die Orte konstanter Echolaufzeiten beschreiben, bzw. mittels tomographischer Projektionen von Empfangssignalen der einzelnen Radarstationen durchgeführt werden, wobei im Rückstren-Querschnitt über einem bestimmten Schwellenwert liegende Streuzentren, welche komplexe Ziele repräsentieren, mit Hilfe eines Kriteriums von benachbarten Punkten, d.h. eines maximalen gegenseitigen Abstands zu einem Ziel zusammengefaßt werden, zur tomographischen Bildrekonstruktion eine gleichmäßige Verteilung der Rückstreu-Echoleistung eines Entfernungsbereichs über den entsprechenden, gesamten Kreisabschnitt des Antennensektors erfolgt, im Schnittbereich der Entfernungsbereiche die entsprechenden Echoleistungen addiert werden, und die geforderte Ortungsgenauigkeit von wenigen Metern bei einer geringen Anzahl von mindestens drei Radarstationen durch eine Software-Filterung mehrerer zeitlich aufeinanderfolgender Messungen erreicht wird.

3. System nach Anspruch 1, dadurch **gekennzeichnet**, daß zur Objektklassifikation und zur Bestimmung einer Objekt-Längsrichtung in Quasi-Echtzeit mittels tomographischer Projektionen Mikrowellenbilder von erfaßten Objekten aus unterschiedlichen Meßrichtungen von Einzelstationen (R₁, R₂, R₃) oder von Stationspaaren (R₁/R₂; R₁/R₃; R₂/R₃) überlagert werden.

4. System nach Anspruch 1, dadurch **gekennzeichnet**, daß zur Ortung und Klassifikation von Objekten bistatische Meßgeometrien gebildet werden, wobei durch Kombination mehrerer Mikrowellenbilder von verschiedenen Sensoren oder Sensorpaaren ein Gesamtbild mit wichtigen Strukturteilen eines ausgewählten Objekts erstellt wird, indem für jede Auflösungszelle ein Maximalwert der entsprechenden Echointensität aller verwendeten Mikrowellenbilder dargestellt wird.

5. System nach Anspruch 1, **dadurch gekennzeichnet**, daß bei bewegten Objekten zur Erzeugung von Mikrowellenbildern mit einer großen Auflösung synthetische Aperturen durch eine Relativbewegung zwischen Objekt und Radarstation erzeugt werden, wobei durch eine entsprechende Verarbeitung von von einer realen Antenne gemessenen komplexwertigen Echos in Abhängigkeit vom Aspektwinkelbereich und vom Objektabstand synthetisch ein Antennenarray mit sehr großen Abmessungen erzeugt wird.

6. System nach Anspruch 3 und 5, dadurch **gekennzeichnet,** daß zur Klassifikation von Objekten mittels Mikrowellenbildern alle Kombinationen von Sende- und Empfangsstationen des Nahbereichs-Radarnetzes gebildet werden.

7. System nach Anspruch 1, dadurch **gekennzeichnet,** daß zur Erhöhung der Ortungsgenauigkeit von Objekten Summen- und Differenzlaufzeiten von Radarsignalen zwischen den einzelnen Radarstationen des Nahbereichs-Radarnetzes gebildet werden.

8. System nach Anspruch 1, dadurch **gekennzeichnet,** daß zum Erkennen von Falschzielen bzw. Clutterstrukturen infolge von Mehrwegeausbreitung die von den einzelnen Radarstationen des Nahbereichs-Radarnetzes erzeugten Mikrowellenbilder verglichen werden.

9. System nach Anspruch 1, dadurch **gekennzeichnet,** daß zur Unterdrückung von Echos bekannter Festziele Empfänger rechnergesteuert zeitlich ausgetastet werden.

10. System nach Anspruch 1, dadurch **gekennzeichnet,** daß komplexwertige Echosignale mit Meßwerten von nicht-beweglichen Objekten für den Ausgangszustand kompensiert werden.

11. System nach Anspruch 1, dadurch **gekennzeichnet,** daß jeder Sender mit einem individuellen Code moduliert wird, so daß jede Empfangsstation durch eine Korrelatoradaptierung mit Software jederzeit mit jedem Sender eine bistatische Meßanordnung bilden kann, deren Synchronisation aufgrund von bekannten Entfernungen der Stationen untereinander durch Messung des direkten Signals erfolgt.

12. System nach Anspruch 1, dadurch **gekennzeichnet,** daß durch Korrelation der zeitlich aufeinanderfolgenden, von den Einzelstationen gemessenen Echoprofilen die entsprechenden Radialgeschwindigkeiten der Ziele in Quasiechtzeit mit einem geringeren Datenbedarf im Vergleich zur Dopplertechnik gebildet werden.

## Claims

1. A system for locating a plurality of objects and obstructions and for detecting and determining the rolling status of moving objects, such as aircraft, ground vehicles and the like in the region of an airport, comprising a plurality of radar stations for transmitting and receiving and a central station, **characterized** in that a short-range radar network having at least three radar stations (R), from which via stationary transmitting antennas (A_{R}) a large sector in the azimuth of as a rule in each case more than 90° is illuminated with coherent time-pulsed microwaves or other microwave signal forms and with which stationary receiving antennas (A_{R}) with fixed divided sector characteristic and with one receiving channel per subsector are associated which for bistatic measurements also receive signals from the other stations, the separation of the signals from individual stations being effected by selecting different frequencies or a time triggering of transmitted signals and receiver gates, or by station-specific modulation codes, and illumination zones are selected in such a manner that no shadow zones occur.

2. A system according to claim 1, **characterized** in that an exact position determination and an exact tracking are carried out with a location accuracy of a few metres of objects to be detected by means of computation of the intersections of arcs which describe the loci of constant echo delay times, or by means of tomographic projections of received signals of the individual radar stations, where scattering centers lying in the backscatter-section above a determined threshold value and representing complex targets are combined with the aid of a criterion of adjacent points, i.e. of a maximum mutual distance to one target, for the tomographic image reconstruction a uniform distribution of the backscatter echo power of a range region is effected over the corresponding total circular segment of the antenna sector, in the intersection region of the range regions the corresponding echo powers are added and the required location accuracy of a few meters is achieved with a low number of at least three radar stations by software filtering of several time consecutive measurements.

3. A system according to claim 1, **characterized** in that for object classification and for determining an object longitudinal direction by means of tomographic projections in quasi real time, microwave images of detected objects from different measuring directions of individual stations (R₁, R₂, R₃) or station pairs (R₁/R₂; R₁/R₃; R₂/R₃) are superimposed.

4. A system according to claim 1, **characterized** in that for location and classification of objects bistatic measuring geometries are formed, an overall image with important structural components of a selected object being composed by combination of several microwave images from different sensors or sensor pairs in that for each resolution cell a maximum value of the corresponding echo intensity of all the microwave images employed is represented.

5. A system according to claim 1, **characterized** in that in order to generate microwave images with high resolution for moving objects, synthetic apertures are generated by the relative movement between object and radar station, and whereby by means of a corresponding processing of complex echoes measured by a real antenna an antenna array with very large dimensions is generated synthetically in dependance upon the aspect angle range and object distance.

6. A system according to claim 1, **characterized** in that for classification of objects by means of microwave images all combinations of transmitting and receiving stations of the short-range radar network are formed.

7. A system according to claim 1, **characterized** in that to increase the location accuracy of objects sum and difference transit times of radar signals between the individual radar stations of the short-range radar network are formed.

8. A system according to claim 1, **characterized** in that for identifying false targets or clutter structures due to multipath propagation the microwave images generated by the individual radar stations of the short-range radar network are compared.

9. A system according to claim 1, **characterized** in that to suppress echoes of known fixed targets receivers are blanked out at times controlled by a computer.

10. A system according to claim 1, **characterized** in that complex echo signals are compensated with measured values of non-moving objects for the initial state.

11. A system according to claim 1, **characterized** in that each transmitter is modulated with an individual code so that by correlator adaptation with software any receiving station can form at any time with any transmitter a bistatic measuring arrangement, the synchronization of which is effected on the basis of known distances of the stations with respect to each other by measurement of the direct signal.

12. A system according to claim 1, **characterized** in that by correlation of the consecutive echo profiles measured by the individual stations, the corresponding radial speeds of the objects can be formed in quasi real time with less date requirement than with the Doppler technique.

## Revendications

1. Système pour localiser plusieurs objets et obstacles ainsi que pour détecter et déterminer l'état de roulement d'objets mobiles, tels que des avions, des véhicules au sol et similaires, dans la zone d'un aéroport, comportant un certain nombre de stations radar pour l'émission et la réception et une station centrale, caractérisé par un réseau radar de champ proche avec au moins trois stations radar (R) à partir desquelles un secteur important en azimut, en règle générale supérieur à 90°, est illuminé à l'aide d'antennes d'émission stationnaires (A_{R}) avec des ondes micrométriques cohérentes pulsées dans le temps ou d'autres formes de signaux hyperfréquences, et auxquelles sont associées des antennes de réception (A_{R}) stationnaires à caractéristique de secteur rigide, subdivisée, avec chaque fois un canal de réception par secteur élémentaire, lesquelles antennes, pour des mesures bistatiques, reçoivent également des signaux d'autres stations, la séparation des signaux provenant de stations différentes étant opérée par le choix de fréquences différentes ou par un déclenchement échelonné dans le temps de signaux d'émission et commutation des récepteurs ou par des codes de modulation spécifiques aux stations, les zones illuminées étant choisies en sorte qu'il n'y ait pas de zones d'ombre.

2. Système selon la revendication 1, caractérisé par le fait que l'on procède à une détermination précise de la position et à une formation précise de la trace des objets à détecter, avec une précision de localisation de quelques mètres, par calcul des points d'intersection des arcs de cercle décrits par les lieux de durée constante de propagation d'écho et par projections tomographiques de signaux de réception des différentes stations radar, les centres de rétro-diffusion au-delà d'un seuil déterminé dans la section de rétro-diffusion, qui représentent des cibles complexes étant regroupés selon un critère de points voisins, c'est-à-dire de distance réciproque maximale, pour former une cible, une distribution régulière de la puissance d'écho rétro-diffusé dans une zone de distance étant réalisée sur la totalité du segment de cercle concerné du secteur d'antenne à des fins de reconstruction tomographique de l'image, les puissances d'écho concernées étant additionnées dans la région d'intersection des zones de distance et la précision de localisation souhaitée de quelques mètres, pour un petit nombre de stations radar d'au moins trois, étant obtenue par un filtrage logiciel de plusieurs mesures consécutives dans le temps.

3. Système selon la revendication 1, caractérisé par le fait que pour la classification des objets et la détermination d'une direction longitudinale d'objet, on superpose en temps quasi réel, par des projections tomographiques, des images en ondes micrométriques d'objets détectés dans différentes directions de mesure de stations distinctes (R₁, R₂, R₃) ou de couples de stations (R₁/R₂; R₁/R₃; R₂/R₃).

4. Système selon la revendication 1, caractérisé par le fait que pour la localisation et la classification d'objets, on forme des géométries de mesure bistatiques, une image globale avec des éléments structurels importants d'un objet sélectionné étant réalisée par combinaison de plusieurs images en ondes micrométriques de plusieurs détecteurs ou couples de détecteurs, une valeur maximale de l'intensité d'écho correspondante de toutes les images en ondes micrométriques utilisées étant représentée pour chaque cellule de résolution.

5. Système selon la revendication 1, caractérisé par le fait que dans le cas d'objets mobiles, pour produire des images en ondes micrométriques avec une résolution élevée, on produit des ouvertures synthétiques avec un déplacement relatif entre l'objet et la station radar, un réseau d'antennes de très grandes dimensions étant généré de manière synthétique par un traitement adapté, en fonction de la zone angulaire d'apparition et de la distance de l'objet, des échos à valeur complexe mesurés par une antenne réelle.

6. Système selon les revendications 3 et 5, caractérisé par le fait que pour la classification d'objets à l'aide d'images en ondes micrométriques on forme toutes les combinaisons de stations d'émission et de stations de réception du réseau radar de champ proche.

7. Système selon la revendication 1, caractérisé par le fait que pour accroître la précision de la localisation d'objets, on forme les sommes et les différences des temps de propagation de signaux radars entre les différentes stations du réseau radar de champ proche.

8. Système selon la revendication 1, caractérisé par le fait que, pour détecter de fausses cibles ou des structures clutter dues à une propagation dans plusieurs directions, on compare les images en ondes micrométriques produites par les différentes stations radar du réseau radar de champ proche.

9. Système selon la revendication 1, caractérisé par le fait que pour éliminer les échos de cibles fixes connues on interroge les récepteurs de manière commandée dans le temps par des ordinateurs.

10. Système selon la revendication 1, caractérisé par le fait que l'on compense, pour l'état de sortie, les signaux d'écho complexes avec des valeurs de mesure d'objets non mobiles.

11. Système selon la revendication 1, caractérisé par le fait que chaque émetteur est modulé avec un code individuel de sorte que chaque station réceptrice par une adaptation de corrélation avec logiciel, peut à tout instant former avec chaque émetteur un dispositif de mesure bistatique, dont la synchronisation est opérée sur la base des distances connues des stations entre elles par mesure du signal direct.

12. Système selon la revendication 1, caractérisé par le fait que par corrélation des profils d'écho consécutifs dans le temps, mesurés par les différentes stations, on forme en temps quasi réel les vitesses radiales correspondantes des cibles avec un petit nombre de données comparativement à la technique doppler.
